# EUROPÄISCHE PATENTANMELDUNG

(11) **EP 2 644 260 A1**
(43) Veröffentlichungstag der Anmeldung: **02.10.2013**
(21) Anmeldenummer: 13001192.7
(22) Anmeldetag: 09.03.2013
(51) Int. Cl.: B01D 63/10

(54) **Membrane für Umkehrosmose**

(30) Priorität: 28.03.2012 DE 102012006320
(71) Anmelder: Völker, Manfred, 63825 Blankenbach (DE)
(72) Erfinder: Völker, Manfred, 63825 Blankenbach (DE)
(74) Vertreter: Flosdorff, Jürgen

(57) **Zusammenfassung**

Die Umkehrosmosemodule, jeweils enthaltend ein Modulrohr mit einem Modulboden und einem Moduldeckel und eine in dem Modulrohr angeordnete Umkehrosmosemembran mit einem Permeatsammelrohr, sind dadurch gekennzeichnet, dass die Umkehrosmosemembran einen feststehenden, vorbestimmten Durchmesser und eine aus vorbestimmten Längenabstufungen ausgewählte Länge hat.

## Beschreibung

Zur Versorgung von Hämodialysegeräten werden unterschiedliche Reinstwasservolumina benötigt. Je nach Ausstattung der Dialysezentren bzw. der Behandlungsorte kann eine Anzahl von einem bis zu fünfzig Hämodialysegeräten und darüber installiert sein. Zurzeit wird die Reinstwasserversorgung durch Umkehrosmoseanlagen mit unterschiedlichen Membranen, sowohl im Durchmesser als auch in der Längenabstufung und in der Anschlussart der Modulrohre realisiert.

Ziel der Erfindung ist die Angabe kostengünstiger Umkehrosmosemodule für einen großen Reinstwasserversorgungsbereich, insbesondere für die Versorgung von Hämodialysebehandlungen.

Zur Vermeidung bakterieller Kontamination als auch anderer biologischer Ablagerungen und zur Verbesserung der Ausspülung bzw. Desinfektion ist eine weitere durch diese Erfindung zu lösende Aufgabe, eine Totraumfreiheit, sowohl im Primär- als auch im Sekundärbereich der Membran, herzustellen.

Mit der Erfindung soll auch eine Moduleinheit bestehend aus einer Membran, die in ein Modulrohr eingebaut ist, geschaffen werden, die mit einfachsten Mitteln ohne großen Installationsaufwand hydraulisch anzuschließen ist, oder zu Modulstationen größerer Kapazität verschaltet werden kann.

Darüber hinaus sollen die Herstellkosten der Membrane auch bei geringeren Produktions-Stückzahlen nicht über denen der in großen Stückzahlen hergestellten Standardmembranen liegen.

Diese Aufgabe wird erfindungsgemäß durch die Merkmale des Patentanspruchs 1 gelöst.

Vorteilhafte Ausgestaltungen der Erfindung sind in den Unteransprüchen gekennzeichnet.

Die Erfindung sieht Umkehrosmosemembranen mit einem einheitlichen Durchmesser und mindestens drei unterschiedlichen Längen vor, die jeweils in ein totraumfrei durchströmtes Druckrohr mit jeweils gleichem Durchmesser aber unterschiedlichen Längen eingesetzt und so zu einem Umkehrosmosemodul wird, welches in Umkehrosmosen unterschiedlicher Leistung eingesetzt, einzelne sowie auch mehrere Hämodialysegeräte mit Reinstwasser betreibt.

Die Erfindung sieht bevorzugt eine Membrandimensionierung mit einem Durchmesser von 4,7 Zoll bis 5 Zoll, vorzugsweise 4,9 Zoll, und möglichen Längenabstufungen von ca. 40 Zoll, 23 Zoll und 12 Zoll mit den Literleistungen pro Stunde von jeweils ca. 5001, 250 I und 100 I vor.

Dabei sollen die Membranflächen so angepasst sein, dass der transmembrane Fluss zwischen 301/ m² und 40l/ m² vorzugsweise bei ca. 33 l/ m² liegt, um eine möglichst hohe Betriebsdauer bzw. niedrigen Verschleiß der Membranoberfläche auch bei verunreinigtem Rohwasser zu erreichen.

Die Rückhalterate der Natriumsalze soll dabei größer als 99% betragen. Das Material ist so beschaffen, dass eine Temperatur für eine Heißsanitisierung von ca. 85°C möglich ist.

Eine von der Membranentwicklung und den jeweiligen benötigten Reinstwasserqualitäten abweichende Dimensionierung sowohl in der Literleistung als auch im Durchmesser ist im Rahmen dieser Erfindung, soweit es sich dabei um Membranen gleichen Durchmessers handelt und deren maximale Länge jeweils 43 Zoll nicht überschreitet bzw. deren kleinste Länge ein Teil davon ist.

Jedenfalls sollen durch den einheitlichen Durchmesser und bevorzugt drei unterschiedliche Membranlängen mit erheblichem Vorteil Umkehrosmoseanlagen mit den jeweils gleichen hydraulischen Membrananschlüssen produziert werden, die insbesondere alle in der Dialyse vorkommenden Behandlungskapazitäten abdecken, angefangen vom Einzelplatz bei Heimpatienten bis hin zu großen Dialysestationen mit mehr als 50 Plätzen.

Zur Erhöhung der Kapazität können dabei die Membranen durch Seriell- und oder Parallelschaltung zu Membranstationen zusammengeschaltet werden.

Weitere für die Spezifikation der Membranen und deren Einbau relevante Daten sind in den nachfolgend aufgeführten Figuren beschrieben.
- Figur 1: Schema einer Standardmembran im Druckrohr
- Figur 2: Schema einer neuen Membran im Druckrohr
- Figur 3: Maße der neuen Membran
- Figur 4: Moduleinheit
- Figur 4.1: Schnitte Moduleinheit
- Figur 4.2: Detail Abdichtung der Membran in der Moduleinheit

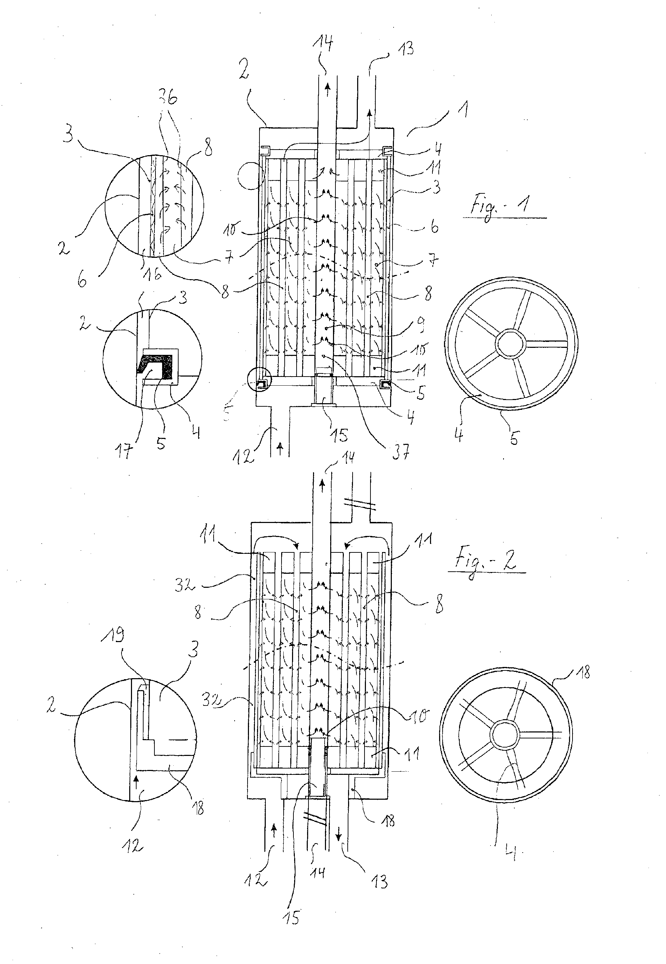

Dabei zeigt Figur 1 ein Umkehrosmosemodul (1) bestehend aus einer Umkehrosmosemembran (3), die in einem Modulrohr (2) formschlüssig mittels Lippendichtung (5) eingebaut ist.

Das Speisewasser wird über Anschluss (12) so in das Modulrohr (2) geführt, dass die Lippendichtung (5) den Modultotraum (16), d. h. den Zwischenraum zwischen Modulrohrinnenseite und Membrandeckschicht (6) verschließt, damit die zugeführte Flüssigkeit aus energetischen Gründen ausschließlich über die Speisewasserkanäle (8) geführt werden. Zur Abstützung der Speisewasserkanäle (8) zwischen den Permeatsammeltaschen (7) wird ein strömungstechnisch günstiges Kunststoffgewebe eingebracht.

Das Speisewasser verlässt als Konzentrat über Anschluss (13) das Modulrohr (2).

Bedingt durch einen hier nicht dargestellten Strömungswiderstand in der Konzentrat Ableitung (13) wird das zugeführte Speisewasser mittels Druck über die aktive Membran (36) in die Permeatsammeltaschen (7) geführt.

Mehrere Permeatsammeltaschen (7) sind spiralförmig um das Permeatsammelrohr (9) gewickelt. Günstigerweise sind es bei der vorgesehenen Lösung ca. 9 Taschen. Die Permeatsammeltaschen (7) haben ein offenes Ende am Permeatsammelrohr (9) und sind an den übrigen 3 Seiten verklebt (11), sodass das filtrierte Permeat aus den Permeatsammeltaschen (7) heraus über Permeatbohrungen (10) in das Permeatsammelrohr (9) fließen kann. In den Permeatsammeltaschen ist ein strömungstechnisch günstiges Kunststoffgewebe eingebracht, welches zur Abstützung, als auch zur Weiterleitung des filtrierten Permeates hin zum Sammelrohr (9) dient. Für die in der Erfindung beschriebenen Membrane (3) sind die Permeatsammeltaschen (7) mit einem Winkel von ca. 60° überlappend am Sammelrohr (9) befestigt. Die äußere Ummantelung der Membrane (3), die Membrandeckschicht (6), ist wasserundurchlässig.

Das Permeat verlässt das Modulrohr (2) über Anschluss (14). Das andere Ende des Permeatsammelrohrs (9) wird mittels eines Verschlusses (15) abgedichtet. Zur Vermeidung einer Teleskopierung der spiralförmig gewickelten Membran sind an beiden Enden der Umkehrosmosemembran (3) die Antiteleskopsterne (4) angebracht, die auch eine Aufnahme der Lippendichtung (5) beinhalten.

Nachteilig am Stand der Technik sind die Toträume (17) innerhalb der Lippendichtung (5), (16) zwischen Druckrohrinnenseite und Membranoberseite auf der gesamten Länge der Membran und (37) im Permeatsammelrohr zwischen Verschluss (15) und den ersten Permeatbohrungen (10).

Figur 2 zeigt zur Vermeidung des in Figur 1 dargestellten Totraums innerhalb des Permeatsammelrohres (9) zwei Möglichkeiten. Der Stopfen (15) wird bis zur ersten Permeatbohrung (10) verlängert, außerdem erhält das Modulrohr (2) bzw. dessen Anschlusseinheit einen weiteren Anschluss (14), sodass durch Entfernen des Stopfens (15) das Permeatsammelrohr (9) in beiden Richtungen durchflossen werden kann.

Vorzugsweise wird auch der Konzentratanschluss (13) am gleichen Ende des Modulrohrs (2) bzw. dessen Anschlusseinheit angebracht, sodass sich alle Anschlüsse (12, 13, 14) auf einer Seite des Modulrohres (2) befinden.

Zur Vermeidung des Totraumes (16) wird die Umkehrosmosemembran (3) in einen Membrankragen (18) gesteckt, der integraler Bestandteil der Modulrohranschlusseinheit ist. Die Membran wird durch einen großflächigen Dichtring (19) im Membrankragen (18) abgedichtet. Das zugeführte Speisewasser fließt dabei ohne zusätzlichen energetischen Aufwand durch den gesamten Modulringspalt (32) und mündet dann in die Speisewasserkanäle (8) ein.

Zur Vermeidung einer Membranteleskopierung in Strömungsrichtung erhält der Membrankragen (18) einen Stern (4), oder auch eine andere strömungstechnisch und konstruktiv gleichwertige Form. Das Antiteleskopelement hat einen äußeren Ring und einen inneren Ring, durch den sich das Permeatsammelrohr erstreckt. Die beiden Ringe sind durch voneinander beabstandete Stege verbunden, die bevorzugt sternförmig verlaufen. Durch das Antiteleskopelement ist die Her-stellung der Membran erheblich vereinfach, da sie lediglich aufgewickelt werden muss.

Durch die in Figur 2 vorgestellten Maßnahmen sind die in Figur 1 dargestellten Toträume eliminiert und die Umkehrosmosemembran (3) kann sehr einfach, ohne den getrennten Teleskopstern (4) produziert werden. Die hydraulischen Anschlüssen sind einfach zu gestalten, da sich die Umkehrosmoseanschlüsse auf einer Seite befinden.

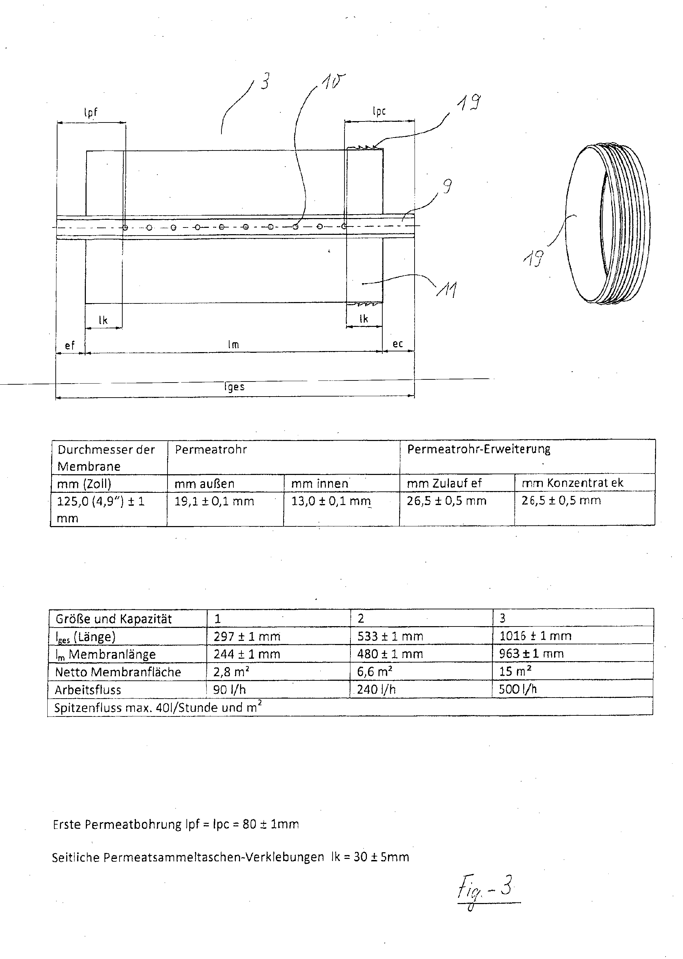

Figur 3 zeigt die Bemaßungen der vorgesehenen Membrane in drei Größen und den damit verbundenen drei Arbeitsflüssen, wobei das Ziel der Erfindung unabhängig von einer technologischen Weiterentwicklung eine Membran mit einem einheitlichen Durchmesser für jeweils alle drei Membrangrößen vorsieht.

Es ist auch dargestellt, dass die Permeatbohrungen (10) unmittelbar nach den seitlichen Permeattaschenverklebungen (11) beginnen. Zur Maximierung der für die Filtration zur Verfügung stehenden Membranfläche soll die umlaufende Permeattaschenverklebung (11) die Breite von ca. 30mm nicht überschreiten.

Die Permeatbohrungen (10) können sowohl gleichmäßig verteilt als auch unsymmetrisch über die Länge des Permeatsammelrohres (9) verteilt sein, um im letzteren Fall eine noch bessere Durchströmung des Permeatsammelrohres (9) zu erreichen.

Außerdem zeigt Figur 3 ein Dichtungselement (19), welches kein integraler Bestandteil der Membrane ist. Vorzugsweise besteht das Dichtungselement aus einem weichen Kunststoff mit einer Breite, die in etwa der Permeattaschen-Verklebungsbreite Ik entspricht. Mit Vorteil hat die Dichtung eine auf der Membran liegende glatte Seite mit einer Vorspannung und einer Material-bedingten Rutschhemmenden Wirkung und eine im Kragen (18) dichtenden Seite mit feinen leichte formbaren Lippen, die die Dichtung im Kragen (18) herstellen.

Das Membranelement zeigt keinen Antiteleskopstern (4), da dieser Bestandteil des Membrankragens (18) ist. Dadurch lässt sich die Membran sehr einfach und kostengünstig produzieren.

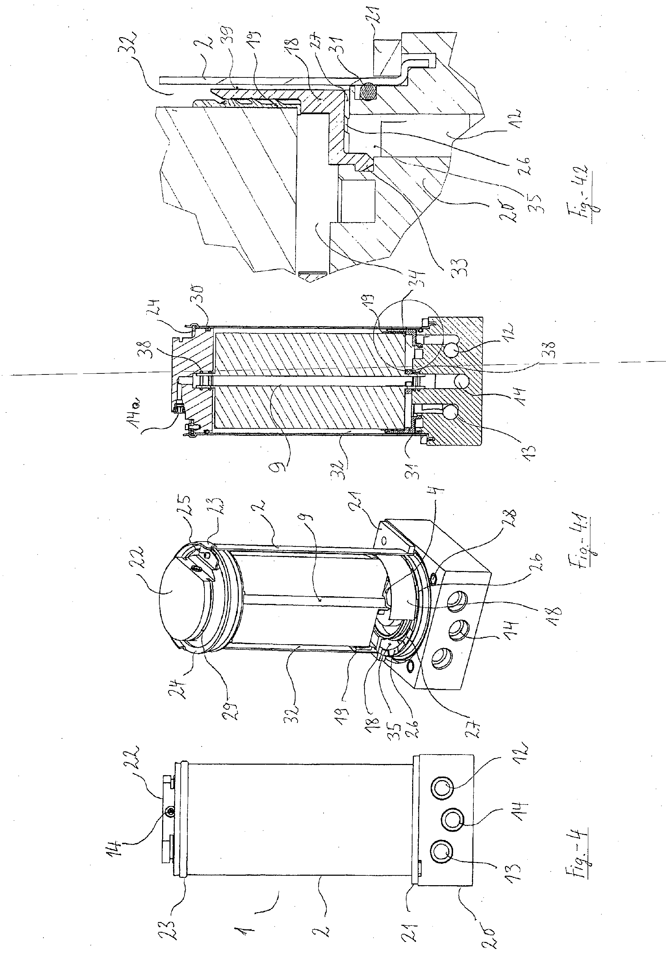

Figur 4 zeigt den Zusammenbau eines Umkehrosmosemoduls (1) bestehend aus dem Modulboden (20), dem Modulrohr (2) und dem Moduldeckel (22). Das Modulrohr (2) wird mittels Flanschbefestigung (21) über die Bohrung (28) mittels hier nicht dargestellter Schrauben befestigt. Der Modulboden (20) ist gleichzeitig hydraulische Anschlusseinheit, an der alle zu- und abführenden Leitungswege (12, 13, 14) anschließbar sind.

### Figur 4.1

Der Moduldeckel (22) wird mit dem Deckelbefestigungsring (24) über eine Modulrohrauswölbung (23) befestigt. Zur Sicherheit kann der Deckelbefestigungsring (24) mittels eines Ringhalters (25) sowohl auf Abstand als auch auf ein mögliches Herausspringen gesichert werden. Der Moduldeckel (22) wird durch einen umlaufenden Dichtring (30) abgedichtet.

In Figuren 4/4.1 ist ein beidseitiger Permeatausgang (14) dargestellt.

Es ist ebenso möglich am oberen Ende des Permeatsammelrohrs (9) einen Stopfen (15) einzubringen, damit das Permeat ausschließlich am Anschluss (14) des Modulbodens (20) abgeführt wird.

Figur 4.1 zeigt eine zweiteilige Anschlusseinheit bestehend aus Modulboden (20) und dem Membrankragen (18). Die Membran ist sowohl mit dem

Permeatsammelrohr (9) und den Dichtringen (38), als auch über den gesamten äußeren Durchmesser mittels Membrandichtung (19) eingesetzt. Die Speisewasserzuführung, von Anschluss (12) kommend, wird zunächst in den ringförmigen Speisewasser Zuströmraum (35) des Modulbodens (20) geführt und wird von dort über die Ringspaltspeisewasserausströmung (26) und die Ringspaltzuführung (39) mit hoher Geschwindigkeit und Drall in den Ringspalt (32) geführt, um am oberen Ende der Membrane (3) in die Speisewasserkanäle (8) einzumünden. Am unteren Ende der Membran verlässt die Flüssigkeit als Konzentrat über den ringförmigen Konzentratausströmungsraum (34) die Membrane (3) und über Anschluss (13) das Umkehrosmosemodul (1).

Figur 4.1 zeigt auch, den im Modulkragen (18) integrierten Stern (4), der die Teleskopierung der Membran verhindert.

Figur 4.2 zeigt die Membrandichtung (19) im eingebauten Zustand, das Modulrohr (2) wird über Moduldichtung (31) am Modulboden (20) abgedichtet. Mittels einer Z-förmigen Auswölbung am Modulrohr (2) wird dieses mit der Flanschplatte (21) befestigt.

Es besteht auch die Möglichkeit, das komplette Umkehrosomosemodul (1) als einen Einmalartikel mit integrierter Membrane herzustellen.

### Legende

| | |
|---|---|
| 1. | Umkehrosmosemodul |
| 2. | Modulrohr |
| 3. | Umkehrosmosemembrane |
| 4. | Anti Teleskopstern |
| 5. | Lippendichtung |
| 6. | Membrandeckschicht |
| 7. | Permeatsammeltaschen |
| 8. | Speisewasserkanäle |
| 9. | Permeatsammelrohr |
| 10. | Permeatbohrungen |
| 11. | Permeatsammeltaschen Verklebungen |
| 12. | Speisewasserzuführung |
| 13. | Konzentratableitung |
| 14. | Permeatableitung |
| 15. | Permeatverschluss-/ Stopfen |
| 16. | Modultotraum |
| 17. | Lippendichtung Totraum |
| 18. | Membrankragen mit Anti Teleskopstern |
| 19. | Membrandichtung |
| 20. | Modulboden |
| 21. | Flanschbefestigung |
| 22. | Moduldeckel |
| 23. | Modulrohrauswölbung |
| 24. | Deckelbefestigungsring |
| 25. | Ringhalter |
| 26. | Ringspalt- Speisewasserausströmung |
| 27. | Membrankragensitz |
| 28. | Modulbodenbestigungsbohrungen |
| 29. | Moduldeckel- Ausziehhilfe |
| 30. | Moduldeckeldichtung |
| 31. | Modulbodendichtung |
| 32. | Modulringspalt |
| 33. | Modulkragenclip |
| 34. | Membran Konzentratausströmraum |
| 35. | Speisewasserzuströmraum |
| 36. | Aktive Membrane |
| 37. | Totraum Permeatsammelrohr |
| 38. | Permeatsammler Dichtringe |
| 39. | Ringspaltzuführung |
| 40. | |
| 41. | |
| 42. | |
| 43. | |
| 44. | |
| 45. | |

## Patentansprüche

1. Umkehrosmosemodule, jeweils enthaltend ein Modulrohr (2) mit einem Modulboden (20) und einem Moduldeckel (22) und
eine in dem Modulrohr (2) angeordnete Umkehrosmosemembran (3) mit einem Permeatsammelrohr (9),
**dadurch gekennzeichnet,**
**dass** die Umkehrosmosemembran (3) einen feststehenden, vorbestimmten Durchmesser und eine aus vorbestimmten Längenabstufungen ausge-wählte Länge hat.

2. Umkehrosmosemodule nach Anspruch 1,
**dadurch gekennzeichnet,**
**dass** der vorbestimmte Durchmesser zwischen 4,7 Zoll und 5,0 Zoll, vorzugsweise 4,9 Zoll und die möglichen Längenabstufungen ca. 40 Zoll, 23 Zoll und 12 Zoll betragen.

3. Umkehrosmosemodule nach Anspruch 1 oder 2,
**dadurch gekennzeichnet,**
**dass** die Leistung der Umkehrosmosemembranen (3) ca. 500 l/h, 250 l/h und 100 l/h beträgt.

4. Umkehrosmosemodule nach einem der Ansprüche 1 bis 3,
**dadurch gekennzeichnet,**
**dass** die Membranflächen der Umkehrosmosemembranen (3) 15 m², 6,6 m² und 2,8 m² beträgen.

5. Umkehrosmosemodule nach einem der Ansprüche 1 bis 4,
**dadurch gekennzeichnet,**
**dass** der transmembrane Fluss zwischen 30 l/m² und 40 l/m², vorzugsweise bei ca. 33 l/m² liegt.

6. Umkehrosmosemodule nach einem der Ansprüche 1 bis 5,
**dadurch gekennzeichnet,**
**dass** die Umkehrosmosemembran (3) mit einem Endabschnitt in einen Membrankragen (18) eingesetzt und gegenüber diesem mit einer Ringdichtung (19) abgedichtet ist, wobei der Membrankragen (18) an dem Modulboden (20) befestigt ist und einen Antiteleskopstern (4) aufweist.

7. Umkehrosmosemodule nach einem der Ansprüche 1 bis 6,
**dadurch gekennzeichnet,**
**dass** der Modulboden (20) eine Speisewasser-Zuführungsbohrung (12), die in einem Ringspalt (26) unter dem Membrankragen (18) endet, eine Konzentrat-Ableitungsbohrung (13), die radial innerhalb des Membran-kragens (18) unter der Umkehrosmosemembran (3) endet, und eine mit dem Ende des Permeatsammelrohres (8) verbundene Bohrung (14) aufweist.

8. Umkehrosmosemodule nach einem der Ansprüche 1 bis 7,
**dadurch gekennzeichnet,**
**dass** auch der Moduldeckel (22) eine Bohrung (14a) aufweist, die mit dem anderen Ende des Permeatsammelrohres (9) verbunden ist.

9. Umkehrosmosemodule nach einem der Ansprüche 7 oder 8,
**dadurch gekennzeichnet,**
**dass** ein Ende des Permeatsammelrohres (9) durch einen entfernbaren Stopfen (15) verschließbar ist.

10. Umkehrosmosemodule nach Anspruch 9, wobei das Permeatsammelrohr (9) Permeatbohrungen (10) aufweist,
**dadurch gekennzeichnet,**
**dass** der Stopfen (15) bis zu der ersten Permeatbohrung (10) reicht.
